# FASCICULE DE BREVET EUROPEEN

(11) **EP 2 551 525 B1**
(45) Date de publication et mention de la délivrance du brevet: **08.08.2018**
(21) Numéro de dépôt: 12305579.0
(22) Date de dépôt: 24.05.2012
(51) Int. Cl.: F04C 14/22, F04C 15/06

(54) **Pompe à huile à débit variable comportant un système de régulation de la pression d'huile en fonction de la température**
Ölpumpe mit variablem Durchsatz, die ein Reguliersystem für den Öldruck in Abhängigkeit von der Temperatur umfasst
Variable-flow oil pump comprising a system for regulating oil pressure according to temperature

(30) Priorité: 29.07.2011 FR 1156978
(43) Date de publication de la demande: 30.01.2013
(73) Titulaire: Renault S.A.S., 92100 Boulogne-Billancourt (FR)
(72) Inventeur: Millon, Jean-Pierre, 78870 Bailly (FR)

(56) Documents cités:
- EP-A1- 2 264 318
- EP-A2- 1 790 855
- JP-A- 1 257 791
- JP-A- 62 210 283
- JP-A- 63 289 285

## Description

### Domaine technique de l'invention

La présente invention concerne une pompe à huile à palettes à débit variable pour moteur à combustion interne comportant un système de régulation de la pression de refoulement de l'huile en fonction de la température.

L'invention concerne aussi un moteur à combustion comportant une pompe selon l'invention.

### Etat de la technique

Les pompes à huile à cylindrée variable sont utilisées dans l'industrie automobile pour la lubrification des éléments d'un moteur à combustion interne et pour le refroidissement du moteur.

Les besoins de débit d'huile ne sont pas identiques pendant les cycles de fonctionnement du moteur. Par exemple, à froid, l'huile sert uniquement à la lubrification des éléments du moteur puis, lorsque le moteur est sollicité, l'huile sert à la lubrification et au refroidissement de ces éléments. Le débit doit être modulé en fonction des régimes du moteur afin de diminuer les consommations d'énergie.

Des pompes à huile à débit variable sont associées aux moteurs pour amener la quantité d'huile nécessaire en fonction des régimes du moteur. Une telle pompe est équipée de moyens de régulation de la pression d'huile à la sortie de la pompe, pour refouler l'huile dans une rampe d'huile du moteur à des valeurs de pression précises.

Or le besoin de pression d'huile est défini au niveau de la rampe et varie en fonction de la température de l'huile et en fonction de la perte de charge entre la pompe et la rampe d'huile. Le besoin est défini à priori et à chaud (besoin maximal) et la pression en régulation à la rampe à froid est supérieure à la pression à la rampe à chaud, ce qui entraine une surconsommation d'énergie ainsi que des efforts plus importants pour les organes de la pompe. Cela provoque aussi une augmentation du niveau de bruit de fonctionnement de ladite pompe.

La demande de brevet EP-A1 2264318 divulgue une pompe à huile à débit variable comprenant un carter de pompe, un stator comportant une entrée et une sortie d'huile et qui est monté mobile en coulissement longitudinal ou en rotation dans le carter, un rotor tournant autour d'un axe fixe par rapport au carter de pompe et équipé de palettes pouvant coulisser radialement, un système de régulation de la pression d'huile de refoulement composé d'un premier système logé dans une première chambre de régulation formée à droite du carter et d'un deuxième système de régulation logé dans une deuxième chambre diamétralement opposée à la première par rapport à l'axe du rotor, et d'un circuit de régulation reliant la sortie d'huile à la première et à la deuxième chambre de régulation. Ce système de régulation est perfectionné par l'ajout d'un dispositif de régulation commandé en fonction de la température d'huile qui comporte un orifice formé dans le carter de pompe vers la première chambre de régulation, une conduite entre cet orifice et un carter d'huile, et un obturateur de l'orifice en fonction de la température qui est monté sur un cylindre coulissant longitudinalement dans un alésage défini dans le carter de pompe. Le cylindre comporte, à une extrémité un ressort et, à l'autre extrémité un système thermostatique qui pousse le cylindre depuis une position d'ouverture lorsque la température d'huile est inférieure à un seuil vers une position de fermeture quand la température d'huile est supérieure à ce seuil. Le système thermostatique peut être ou non relié à une source de chauffage électrique commandé en fonction de la température de l'huile afin de modifier artificiellement le seuil de commutation.

Un inconvénient de ce dispositif de régulation thermique est son encombrement qui nécessite un alésage dans le carter de pompe pour le coulissement du cylindre.

Un autre inconvénient de ce dispositif est le système thermostatique complexe, à durée de vie limitée en nombre de cycles et qui possède une forte inertie thermique et donc une hystérésis importante.

Un but de l'invention est de pallier ces inconvénients et l'invention a pour objet un système de régulation de la pression d'huile commandé selon un seuil de température de l'huile, simple et peu coûteux.

### Bref résumé de l'invention

Dans ce but, l'invention propose une pompe à huile à débit variable comportant un système de régulation de la pression d'huile en fonction de la température, la pompe comportant :
- un carter de pompe,
- un stator qui est monté mobile dans le carter selon un axe de coulissement,
- un rotor qui est monté à rotation dans le stator autour d'un axe de rotation fixe par rapport au carter, et qui porte des palettes aptes à se déplacer radialement par rapport à l'axe du rotor,
- un système de régulation de la pression de refoulement de la pompe qui est logé dans une chambre de régulation de pression formée dans le carter et qui agit sur le stator en fonction de la pression de sortie de l'huile,
- un circuit de régulation de pression qui relie la sortie d'huile à la chambre de régulation,
- un orifice formé de fuite de l'huile dans la paroi du carter vers la chambre de régulation et un moyen d'obturation de l'orifice qui est commandé en fonction de la température de l'huile entre d'une première position associée à son état d'ouverture et une deuxième position associée à son état de fermeture,
caractérisée en ce que le moyen d'obturation comporte un élément en matériau à mémoire de forme et un clapet d'obturation de l'orifice, et en ce que le clapet est apte à passer d'une position plaquée contre la paroi du carter associé à l'état de fermeture du moyen d'obturation à une position distante de ladite paroi vers l'extérieur du carter dans une position associée à l'état d'ouverture.

Selon d'autres caractéristiques de l'invention :
La pompe à huile est caractérisée en ce le moyen d'obturation de l'orifice est dans un état de fermeture dans son état initial de fonctionnement.

La pompe à huile est caractérisée en ce que le moyen d'obturation de l'orifice est dans un état d'ouverture dans son état initial de fonctionnement.

La pompe à huile est caractérisée en ce que le moyen d'obturation est déformable élastiquement lorsque la température de l'élément à mémoire de forme est inférieure à une température seuil, grâce à quoi le clapet est apte à se déplacer depuis sa position plaquée contre la paroi du carter, sous l'action de la pression de l'huile dans la chambre de régulation.

La pompe à huile est caractérisée en ce que le moyen d'obturation est bloqué en état de fermeture lorsque la température de l'élément à mémoire de forme est supérieure à la température seuil.

La pompe à huile est caractérisée en ce que l'élément en matériau à mémoire de forme est en contact avec l'huile.

La pompe à huile est caractérisée en ce que l'élément en matériau à mémoire de forme et le clapet sont réalisés en une seule pièce à mémoire de forme.

La pompe à huile est caractérisée en ce que le système comporte un élément de butée sur lequel le clapet est en appui en position distante de la paroi du carter.

La pompe à huile est caractérisée en ce que la pièce à mémoire de forme est un volet monté pivotant par rapport à la paroi du carter.

La pompe à huile est caractérisée en ce que l'élément à mémoire de forme sollicite élastiquement le clapet en position plaquée contre la paroi du carter.

La pompe à huile est caractérisée en ce que le moyen d'obturation est déformé lorsque la température de l'élément à mémoire de forme est au dessus d'une température de seuil, grâce à quoi le clapet est plaqué contre la paroi du carter.

La pompe à huile est caractérisée en ce que le moyen d'obturation comporte un élément de butée sur lequel le clapet est en appui en position plaquée contre la paroi du carter.

La pompe à huile est caractérisé en ce que la pièce à mémoire de forme est déformée lorsque sa température est au dessus de la température seuil et est conformé à obturer l'orifice de fuite.

### Brève description des figures

D'autres aspects de l'invention vont être présentés dans la description suivante donnée à titre d'exemple non limitatif, dans le but de bien comprendre l'invention et comment elle peut être réalisée en regard des dessins annexés dans lesquels :
La figure 1 est une représentation schématique d'une coupe transversale d'une pompe à huile selon l'invention.
Les figures 2a, 2b et 2c sont des schémas illustrant le fonctionnement du système de régulation de pression en fonction de la température selon un premier mode de réalisation de l'invention.
Les figures 3a, 3b et 3c sont des schémas illustrant le fonctionnement du système de régulation de pression en fonction de la température selon un deuxième mode de réalisation de l'invention.
Les figures 4a et 4b sont des schémas illustrant le fonctionnement du système de régulation de pression en fonction de la température selon un troisième mode de réalisation.
Les figures 5a et 5b sont des schémas illustrant le fonctionnement du système de régulation de pression en fonction de la température selon un quatrième mode de réalisation.

### Description détaillée des figures

La description qui suit se réfère à l'axe longitudinal x et les mêmes éléments représentés dans les figures sont désignés par les mêmes références. L'invention est décrite avec une pompe à débit variable à palettes dont le stator est déplacé selon un coulissement longitudinal mais l'invention n'est pas restreinte à ce type de pompe à débit variable.

Dans la description des différents modes de réalisation, on entend par « état initial de fonctionnement » la phase lorsque la pompe est hors fonctionnement et le moteur arrêté et froid.

Les matériaux à mémoire de forme sont connus pour posséder plusieurs propriétés parmi les matériaux métalliques :
- la capacité de garder en mémoire une forme initiale et d'y « retourner » même après une déformation,
- la possibilité d'alterner entre deux formes préalablement mémorisées lorsque sa température varie de part et d'autre d'une température critique,
- un comportement « super élastique » sans déformation permanente, supérieur à ceux des autres métaux.

Selon l'invention, des pièces en matériau à mémoire de forme sont utilisées avec une de ces trois caractéristiques selon les différents modes de réalisation.

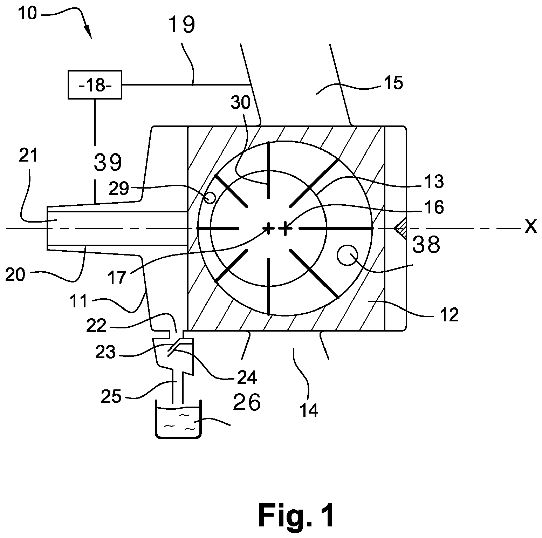

Une pompe 10 à débit variable est représentée de façon schématique dans la figure 1 en coupe transversale.

Elle est composée :
- d'un carter de pompe 11,
- d'un stator 12 comportant un axe 16 et qui est monté mobile en coulissement longitudinal dans le carter 11 selon un axe longitudinal x et qui comporte une paroi intérieure sensiblement cylindrique,
- d'un rotor 13 monté à rotation dans le stator 12 autour d'un axe 17 qui est fixe dans le carter 11,
- un système de régulation 21 de la pression d'huile et un circuit de régulation 19 qui relie la sortie 15 de la pompe à une chambre de régulation 20.
- un système 18 comportant une vanne pilote ou un régulateur hydraulique installé dans le circuit de régulation 19.

Le carter de pompe 11 comporte une chambre destinée à recevoir le stator 12, la chambre de régulation 20 située à une extrémité longitudinale de la chambre, une entrée 14 d'aspiration de l'huile et la sortie 15 de décharge ou refoulement d'huile.

De manière connue, le rotor 13 comporte une paroi extérieure sensiblement cylindrique qui s'étend en regard de la paroi intérieure cylindrique du stator 12. Le rotor porte des palettes 30 dont une extrémité est contact avec la paroi intérieure du stator 12, les palettes étant adaptées à coulisser radialement dans le rotor. Les distances radiales par rapport à l'axe 17 du rotor, entre la paroi extérieure du rotor et la paroi intérieure du stator sont différentes autour du rotor 13 du fait que les axes 17, 16 du rotor et du stator sont décalés. Les longueurs en saillie des palettes entre la paroi extérieure du rotor et la paroi intérieure du stator varient donc autour du rotor. Le volume délimité par une portion de la paroi extérieure du rotor 13 comprise entre une paire de palettes voisines, lesdites deux palettes et la paroi intérieure du stator 12 varie d'une portion de la paroi extérieure du rotor comprise entre une paire de palettes voisines et la portion suivante. Les volumes vont diminuant dans une première zone de compression puis croissant dans une deuxième zone de détente (non représentées).

Le stator 12 comporte une entrée d'huile 38 reliée à l'entrée d'aspiration 14, l'entrée 38 étant située de manière préférentielle dans la zone de détente, et une sortie d'huile 39 reliée à la sortie 15 de refoulement, la sortie 39 étant située de manière préférentielle dans la zone de compression. De l'huile entre par l'entrée 38 et occupe un volume délimité entre deux palettes voisines, la paroi extérieure du rotor 13 et la paroi intérieure du stator 12. Du fait de la diminution des volumes résultant de la rotation du rotor, l'huile est comprimée avant d'être éjectée par la sortie 39,15 d'huile. L'augmentation de l'excentricité ou décalage entre l'axe 16 du stator et l'axe 17 du rotor accroit le débit d'huile en sortie et donc la pression de l'huile de refoulement.

Le système de régulation de la pression refoulement est installé dans la chambre de régulation 20 et il est apte à pousser axialement le stator pour modifier l'excentricité entre l'axe 16 du stator et l'axe 17 de rotation du rotor entre une première position de haut débit (vers l'extrémité droite avec une excentricité maximale) et une deuxième position de bas débit ou débit nul (vers la gauche avec une excentricité minimale voire nulle).

Un circuit de régulation 19 relie la sortie d'huile de refoulement 15 à la vanne pilotée ou au régulateur hydraulique 18, puis à la chambre de régulation 20.

En cas de surpression, une partie de l'huile est refoulée depuis la chambre de régulation 20 vers la sortie d'huile 15 par le circuit 19 et la pression dans la chambre 20 diminue en provoquant un rappel du stator 12 vers l'extrémité gauche et une diminution de l'excentricité entre les deux axes 16,17 du stator 12 et du rotor 13. La diminution de l'excentricité entraîne une diminution du débit de la pompe et donc aussi une diminution de la pression d'huile.

En cas de sous-pression, de l'huile provenant de la sortie d'huile 15 de refoulement est de nouveau injectée, via le circuit 19 et le régulateur hydraulique 18, dans la chambre de régulation 20 en provoquant une augmentation de la pression d'huile à l'intérieur de la chambre 20 et un coulissement du stator 12 vers l'extrémité droite, et donc une augmentation de l'excentricité entre les deux axes 16,17 du stator 12 et du rotor 13. L'augmentation de l'excentricité aboutit à une augmentation du débit d'huile en refoulement et de la pression d'huile.

Selon l'invention, un système de régulation de la pression en fonction de la température de l'huile comprend un orifice de fuite 22, un moyen d'obturation 23 de l'orifice de fuite et un circuit de circulation 25 reliant l'orifice de fuite 22 à un carter d'huile 26.

Selon l'invention, le matériau composant la pièce à mémoire de forme dans les différents modes de réalisation décrits ci-après est par exemple un alliage à base de cuivre, aluminium et nickel (CuAlNi) ou cuivre, aluminium et béryllium (CuAlBe) possédant un comportement « superélastique » et pouvant travailler dans une plage de température de -100°C à 200°C.

L'orifice de fuite 22 est formé dans la paroi du carter 11 de la pompe et communique avec la chambre de régulation 20. De l'huile contenue dans la chambre peut donc s'écouler à l'extérieur du carter diminuant la pression de l'huile dans la chambre de régulation et provoquant un coulissement du stator vers l'extrémité gauche. De ce fait, l'excentricité entre les deux axes 16,17 diminue ce qui conduit à une diminution, voire une suppression, du débit d'huile.

Selon un premier mode de réalisation, le moyen d'obturation comprend un volet 23 en matériau à mémoire de forme, sensiblement en forme de plaque, le volet recouvrant en totalité l'orifice de fuite 22 lorsqu'il est plaqué contre la paroi du carter. Le volet est monté globalement pivotant par rapport à la paroi du carter 11 et une de ses extrémités est rapportée sur la paroi du carter de pompe 11 par un moyen de fixation 27.

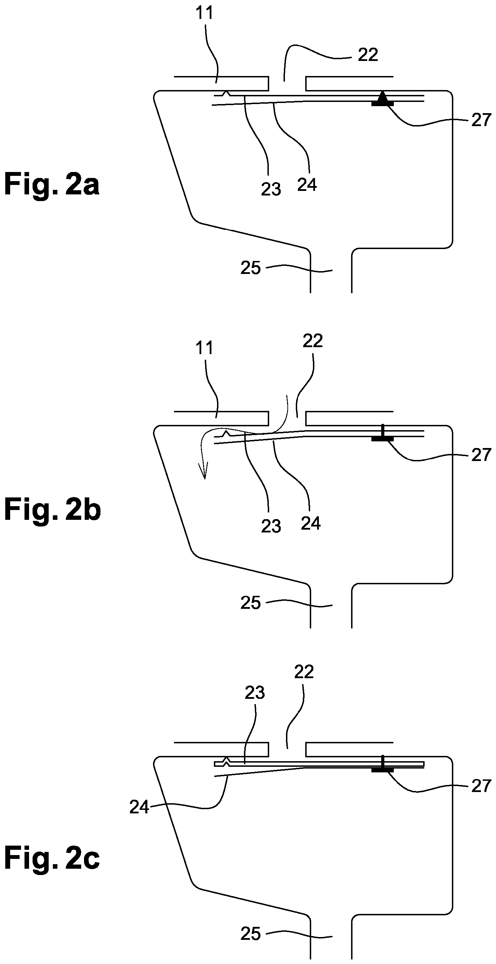

Le volet 23 est monté dans l'état initial de fonctionnement plaqué contre la paroi du carter de façon à fermer l'orifice 22 de fuite ainsi que représenté en figure 2a, le moyen d'obturation étant alors dans un état de fermeture. Dans cette position, le volet 23 est apte à empêcher toute « remontée » depuis le carter d'huile 26 vers la chambre de régulation 20 ou à l'intérieur du carter 11 de pompe pouvant nuire à la fiabilité des composants de la pompe et/ou au bon fonctionnement de la pompe. Ces remontées peuvent être par exemple de l'air ou des gaz provenant du carter d'huile 26.

Un élément de butée 24 rigide et destiné à limiter le débattement du volet 23, qui peut être une lame inclinée est ici fixé sur la paroi du carter et recouvre le volet. Le volet est apte à pivoter et vient en appui contre l'élément de butée. Les déformations du volet restent dans la limite d'élasticité du matériau formant le volet et de ce fait l'élément 24 de butée augmente également la fiabilité de fonctionnement du volet 23.

L'élasticité du matériau constituant le volet 23 varie en fonction de la température. Ainsi à des températures en dessous d'une valeur seuil, le volet 23 est apte à se déformer élastiquement sous une faible poussée sous l'action, par exemple, de la pression de l'huile contenue dans la chambre de régulation 20 même sous faible pression, et le volet 23 peut se déplacer en partie depuis le bord de l'orifice de fuite ou depuis la paroi du carter, tel que représenté à la figure 2b. Le système de régulation est alors dans un état dit d'ouverture. De l'huile contenue dans la chambre de régulation 20 dans le carter de pompe peut alors s'échapper et s'écouler par exemple vers le carter d'huile 26. Le volet revient aussitôt après à sa position initiale. Le volet est réalisé en alliage de matériau conducteur de la température et il est en contact avec l'huile. La température du volet est donc sensiblement celle de l'huile et elle varie avec la température de l'huile qui augmente en fonction du régime du moteur.

Au delà de la valeur de seuil de température du matériau à mémoire de forme, la rigidité du volet est telle qu'il n'est plus apte à se déformer sous la poussée de l'huile contenue dans la chambre de régulation dans la plage de niveaux de pression d'huile connue dans le fonctionnement d'un moteur à combustion interne, telle que représentée à la figure 2c. Le volet reste dans sa position initiale de fonctionnement. L'orifice 22 est fermé au-delà du seuil de température et le moyen d'obturation que constitue le volet 23 est bloqué en état de fermeture. La régulation de la pression de refoulement d'huile est assurée par le système de régulation secondaire de pression.

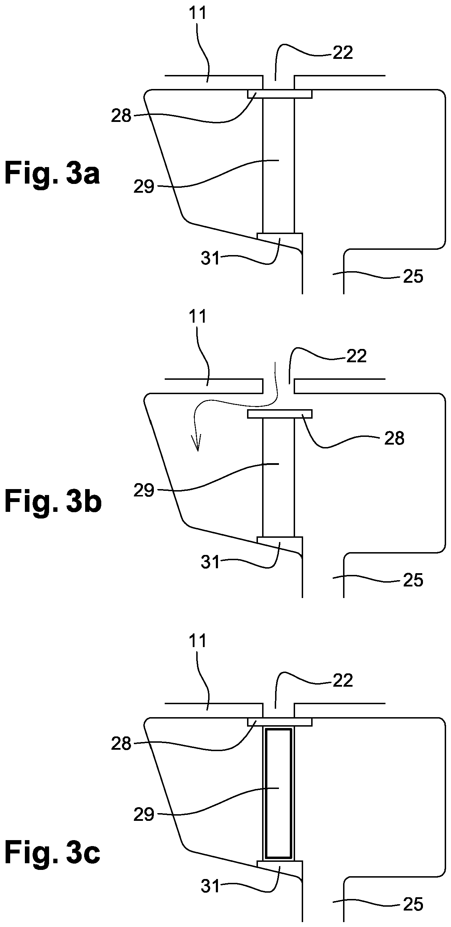

Selon un deuxième mode de réalisation présenté aux figures 3a à 3c, le moyen d'obturation comprend un clapet 28 sensiblement en forme de plaque, le clapet recouvrant en totalité l'orifice de fuite 22 lorsqu'il est plaqué en appui contre la paroi du carter 11 et un élément 29 à mémoire de forme qui est apte à solliciter le clapet en appui contre la paroi du carter.

Le clapet 28 et l'élément à mémoire de forme 29 sont montés dans l'état initial de fonctionnement de telle manière que le clapet 28 est plaqué contre la paroi du carter en obturant l'orifice 22 de fuite, le moyen d'obturation est alors dans un état de fermeture.

Le clapet 28 en position plaquée contre la paroi du carter est apte à empêcher toute « remontée » depuis le carter d'huile vers la chambre de régulation 20 ou à l'intérieur du carter 11 de pompe pouvant nuire à la fiabilité des composants de la pompe et/ou au bon fonctionnement de la pompe. Ces remontées peuvent être par exemple de l'air ou des gaz provenant du carter d'huile 26.

L'élément à mémoire de forme est par un exemple un ressort de compression 29 réalisé dans un matériau à mémoire de forme dont la raideur varie autour d'une valeur de seuil de température du matériau. Le ressort est de manière préférentielle agencé à l'extérieur du carter 11 en dessous du clapet 28 de telle manière qu'il est apte à pousser le clapet 28 contre la paroi du carter 11. Le ressort comporte une extrémité haute en appui sur le clapet 28 et une extrémité basse en appui sur un élément de butée 31.

Lorsque la température du ressort est inférieure à la valeur de seuil, la raideur du ressort est telle qu'il est apte à être comprimé sous une faible poussée du clapet 28 due à l'action de la pression de l'huile contenue dans la chambre de régulation. Le clapet peut se déplacer depuis l'orifice de fuite ou la paroi du carter vers l'extérieur, le moyen d'obturation étant alors dans un état d'ouverture. De l'huile contenue dans la chambre de régulation 20 peut s'échapper via l'orifice de fuite 22, tel que représenté à la figure 3b, vers le carter d'huile et l'huile vient lécher le ressort. Le ressort revient aussitôt à sa position initiale et pousse le clapet 28 contre la paroi du carter 11. Le ressort est en alliage de matériau conducteur, il est en contact avec l'huile et sa température est donc sensiblement celle de l'huile et elle varie avec la température de l'huile qui augmente en fonction du régime du moteur.

Lorsque la température du ressort dépasse la valeur de seuil de température du matériau à mémoire de forme, le ressort reprend sa forme initiale sollicitant le clapet contre la paroi du carter et la raideur du ressort est telle qu'il est bloqué en compression, tel que représenté à la figure 3c, le moyen d'obturation étant dans un état de fermeture.

La régulation de la pression de refoulement d'huile est ensuite assurée par le système de régulation de pression au dessus du seuil de température. Le clapet est en contact avec l'huile et sa température est sensiblement égale à celle de l'huile. Le ressort dont l'extrémité haute peut être soudée au clapet est sensiblement à la même température que le clapet.

Selon un troisième mode de réalisation, le moyen d'obturation comprend un volet 33 en matériau à mémoire de forme, sensiblement en forme de lame, le volet recouvrant en totalité l'orifice de fuite 22 lorsqu'il est plaqué contre la paroi du carter. Le volet est monté pivotant par rapport à la paroi du carter (11) et comporte une extrémité qui est rapportée sur la paroi du carter de pompe 11 par un moyen de fixation 27. L'autre extrémité libre du volet peut être distante de la paroi du carter, ce qui correspond à un état d'ouverture du moyen d'obturation, ou elle peut être plaquée contre la paroi du carter, obturant l'orifice de fuite, ce qui correspond à un état de fermeture du moyen d'obturation. Le volet est conçu pour changer de forme au dessus du seuil de température du matériau à mémoire de forme de manière à obturer l'orifice de fuite et sa rigidité augmente également au dessus dudit seuil de température.

Un élément de butée 34 rigide et destiné à limiter le débattement du volet 23, qui peut être une lame inclinée est ici fixé sur la paroi du carter et recouvre le volet. Le volet est apte à pivoter et vient en appui contre l'élément de butée. Les déformations du volet restent inférieures à sa limite d'élasticité et de ce fait ce moyen 24 augmente également la fiabilité de fonctionnement du volet.

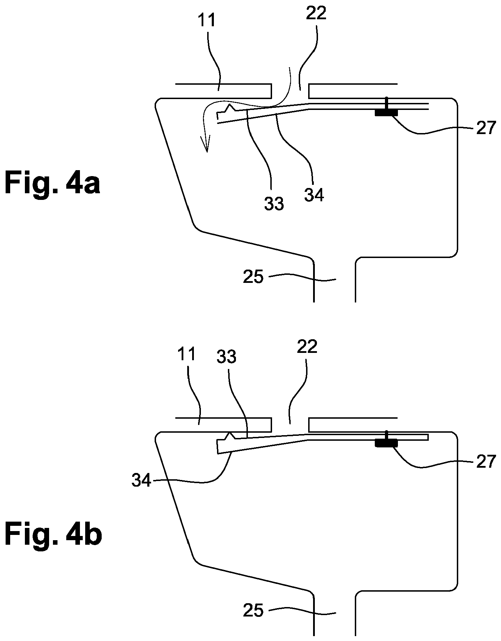

Le moyen d'obturation est monté en état d'ouverture dans l'état initial de fonctionnement. Un jeu entre le volet et la paroi du carter permet à de l'huile contenue dans la chambre de régulation de s'échapper par l'orifice de fuite, comme représenté à la figure 4a. La pression dans la chambre de régulation est donc minimale, l'excentricité entre les deux axes 16,17 du stator 12 et du rotor 13 est minimale et le débit d'huile en sortie de pompe est minimal voire nul.

Le volet est réalisé dans un alliage de matériau conducteur et il est au contact avec l'huile, sa température est sensiblement égale à la température de l'huile qui augmente selon les régimes du moteur.

Au delà du seuil de température du matériau à mémoire de forme, l'extrémité libre du volet 33 s'étend et prend appui sur la butée 34 et elle vient se plaquer contre la paroi du carter 11 fermant l'orifice 22 de fuite, tel que représenté en figure 4b. La rigidité du volet est telle que le volet reste dans cette position au dessus du seuil de température et que le volet est apte à empêcher toute fuite d'huile vers l'extérieur du carter, quels que soient les niveaux de pression d'huile à l'intérieur de la chambre de régulation, dans la plage des valeurs de pressions connues dans le fonctionnement d'un moteur à combustion interne. Le moyen d'obturation est donc bloqué dans l'état de fermeture lorsque la température du volet est supérieure à la température seuil du matériau à mémoire de forme. La régulation de la pression de refoulement d'huile est assurée par le système de régulation de pression décrit dans le préambule.

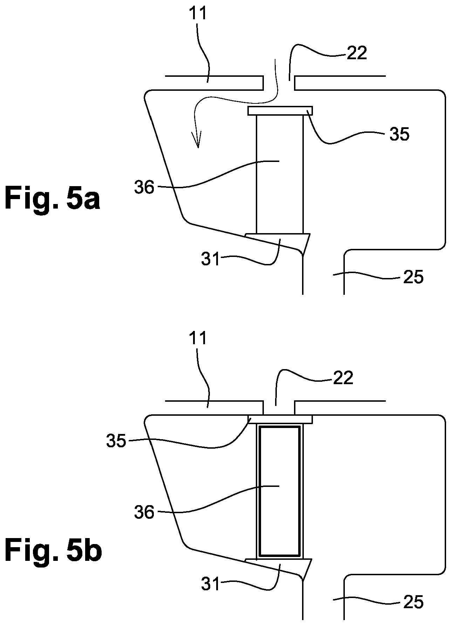

Selon un quatrième mode de réalisation présenté aux figures 5a à 5b, le moyen d'obturation comprend un clapet 35 sensiblement en forme de plaque, le clapet recouvrant en totalité l'orifice de fuite 22 lorsqu'il est plaqué contre la paroi du carter 11 et un élément 36 à mémoire de forme qui est apte à solliciter le clapet contre la paroi du carter.

Le clapet et l'élément à mémoire de forme sont montés dans l'état initial de fonctionnement de telle manière que le clapet 35 est distant depuis la paroi du carter, le moyen d'obturation est alors dans un état d'ouverture.

L'élément à mémoire de forme est par un exemple un ressort de compression 36 réalisé dans un matériau à mémoire de forme, dont la forme et la raideur varient lorsque la température du matériau dépasse une valeur seuil de température. Le ressort 36 est agencé de manière préférentielle à l'extérieur du carter en dessous du clapet de telle manière qu'il est apte à pousser le clapet 35 contre la paroi du carter 11. Il comporte une extrémité haute en appui sur le clapet 35 et une extrémité basse en appui sur un élément de butée 30. Le ressort est conçu pour changer de forme par un allongement longitudinal au dessus du seuil de température du matériau à mémoire de forme. La raideur du ressort augmente également au dessus du seuil de température.

Lorsque la température du ressort est inférieure à la valeur de seuil, la longueur du ressort est telle qu'il existe un jeu entre la paroi du carter 11 et le clapet 35, tel que représenté en figure 5a. De l'huile contenue dans la chambre de régulation peut s'échapper vers l'extérieur du carter via l'orifice 22 de fuite vers le carter d'huile et l'huile vient lécher ledit ressort. Le ressort 36 est en alliage de matériau conducteur, il est en contact avec l'huile et sa température est donc sensiblement celle de l'huile et elle varie avec la température de l'huile qui augmente en fonction du régime du moteur.

Lorsque la température du ressort dépasse la valeur de seuil de température du matériau à mémoire de forme, la longueur du ressort s'accroit de telle manière qu'il sollicite le clapet contre la paroi du carter 11 fermant l'orifice 22, tel que représenté à la figure 5b. Le moyen d'obturation est alors dans un état de fermeture. La raideur du ressort est alors telle qu'il est bloqué en compression, quels que soient les niveaux de pression d'huile à l'intérieur de la chambre de régulation, dans la plage des valeurs de pressions connues dans le fonctionnement d'un moteur à combustion interne.

La régulation de la pression de refoulement d'huile est ensuite assurée par le système de régulation de pression au-delà du seuil de température. Le clapet est en contact avec l'huile et sa température est sensiblement égale à celle de l'huile. Le ressort dont l'extrémité haute peut être soudée au clapet est sensiblement à la même température que le clapet.

L'invention n'est pas limitée aux modes de réalisation présentés ci-dessus. D'autres modes de réalisation peuvent être suggérés dans l'esprit de l'homme de l'art, par exemple avec un bouchon de l'orifice de fuite en un matériau à mémoire de forme, ledit bouchon prenant une première forme en dessous d'une température adaptée à laisser échapper de l'huile contenue dans la chambre de régulation et une deuxième forme fermant ledit orifice au dessus dudit seuil.

## Revendications

1. Pompe à huile à débit variable (10) comportant un système de régulation de la pression d'huile en fonction de la température, la pompe comportant :
- un carter (11) de pompe,
- un stator (12) qui est monté mobile dans le carter (11),
- un rotor (13) qui est monté à rotation dans le stator (12), autour d'un axe de rotation (17) fixe par rapport au carter (11), et qui porte des palettes (30) aptes à se déplacer radialement par rapport à l'axe du rotor,
- un système de régulation de la pression de refoulement de la pompe qui est logé dans une chambre de régulation (20) de pression formée dans le carter (11) et qui agit sur le stator (12) pour le déplacer et modifier la position de l'axe de rotation du rotor (17) par rapport au stator, en fonction de la pression de sortie de l'huile,
- un circuit de régulation (19) de pression d'huile,
- un orifice de fuite (22) de l'huile formé dans la paroi du carter (11) vers la chambre de régulation (20) et un moyen d'obturation (23) de l'orifice de fuite (22) qui est commandé en fonction de la température de l'huile entre d'une première position associée à son état d'ouverture et une deuxième position associée à son état de fermeture,
**caractérisée en ce que** le moyen d'obturation comporte un élément (23, 29, 33, 36) en matériau à mémoire de forme et un clapet (23,28,33,35) d'obturation de l'orifice de fuite (22) et **en ce que** le clapet est apte à passer d'une position plaquée contre la paroi du carter (11) associé à l'état de fermeture du moyen d'obturation à une position distante de ladite paroi vers l'extérieur du carter associée à l'état d'ouverture.

2. Pompe à huile selon la revendication 1, **caractérisée en ce que** le moyen d'obturation est bloqué en état de fermeture lorsque la température de l'élément (23, 29, 33, 36) à mémoire de forme est supérieure à la température seuil.

3. Pompe à huile selon la revendication 2, **caractérisée en ce que** l'élément (23,29, 33, 36) en matériau à mémoire de forme est en contact avec l'huile.

4. Pompe à huile selon la revendication 3, **caractérisée en ce que** l'élément à mémoire de forme (29,36) sollicite élastiquement le clapet (28,35) en position plaquée contre la paroi du carter.

5. Pompe à huile selon la revendication 4, **caractérisée en ce que** le moyen d'obturation comporte un élément de butée (31) sur lequel l'élément (29,36) à mémoire de forme est en appui, sollicitant le clapet (28,35) en position plaquée contre la paroi du carter (11).

6. Pompe à huile selon la revendication 3, **caractérisée en ce que** l'élément en matériau (23 ,33) à mémoire de forme et le clapet (23,33) sont réalisés en une seule pièce à mémoire de forme.

7. Pompe à huile selon la revendication 6, **caractérisée en ce que** la pièce (23, 33) à mémoire de forme est un volet monté pivotant par rapport à la paroi du carter (11).

8. Pompe à huile selon l'une des revendications 5 ou 7, **caractérisée en ce que** l'état initial de fonctionnement du moyen d'obturation est l'état de fermeture.

9. Pompe à huile selon la revendication 8, **caractérisée en ce que** le moyen d'obturation est déformable élastiquement lorsque la température de l'élément (21,29) à mémoire de forme est inférieure à une température seuil, grâce à quoi le clapet (21,28) est apte à se déplacer depuis sa position plaquée contre la paroi du carter (11), sous l'action de la pression de l'huile dans la chambre de régulation.

10. Pompe à huile selon la revendication 8, **caractérisée en ce que** le moyen d'obturation comporte un élément de butée (24) sur lequel la pièce (23) à mémoire de forme est en appui en position distante de la paroi du carter (11).

11. Pompe à huile selon l'une des revendications 5 ou 7, **caractérisée en ce que** l'état initial de fonctionnement du moyen d'obturation est l'état d'ouverture.

12. Pompe à huile selon la revendication 11, **caractérisée en ce que** le moyen d'obturation est déformé lorsque la température de l'élément (36) à mémoire de forme est au dessus d'une température de seuil, grâce à quoi le clapet (35) est plaqué contre la paroi du carter.

13. Pompe à huile selon la revendication 11, **caractérisé en ce que** la pièce à mémoire de forme (33) est déformée lorsque sa température est au dessus de la température seuil et est conformé à obturer l'orifice (22) de fuite.

14. Moteur à combustion interne équipé d'une pompe à huile à débit variable selon l'une quelconque des revendications 1 à 13.

## Patentansprüche

1. Ölpumpe mit variabler Fördermenge (10), die ein System zur Regelung des Öldrucks in Abhängigkeit von der Temperatur umfasst, wobei die Pumpe umfasst:
- ein Pumpengehäuse (11),
- einen Stator (12), welcher beweglich in dem Gehäuse (11) angebracht ist,
- einen Rotor (13), welcher um eine bezüglich des Gehäuses (11) feste Drehachse (17) drehbar in dem Stator (12) gelagert ist und welcher Flügel (30) trägt, die sich bezüglich der Achse des Rotors radial bewegen können,
- ein System zur Regelung des Förderdrucks der Pumpe, welches in einer im Gehäuse (11) ausgebildeten Druckregelkammer (20) aufgenommen ist und welches in Abhängigkeit vom Ausgangsdrück des Öls auf den Stator (12) einwirkt, um ihn zu verlagern und die Position der Drehachse des Rotors (17) bezüglich des Stators zu verändern,
- einen Regelkreis (19) für den Öldruck,
- eine in der Wand des Gehäuses (11) zur Regelkammer (20) hin ausgebildete Ölaustrittsöffnung (22) und ein Verschlussmittel (23) für die Austrittsöffnung (22), welches in Abhängigkeit von der Temperatur des Öls zwischen einer ersten Position, die ihrem Öffnungszustand zugeordnet ist, und einer zweiten Position, die ihrem Schließzustand zugeordnet ist, gesteuert wird,
**dadurch gekennzeichnet, dass** das Verschlussmittel ein Element (23, 29, 33, 36) aus Formgedächtnis-Material und ein Klappenventil (23, 28, 33, 35) zum Verschluss der Austrittsöffnung (22) umfasst, und dadurch, dass das Klappenventil in der Lage ist, sich aus einer gegen die Wand des Gehäuses (11) gedrückten Position, die dem Schließzustand des Verschlussmittels zugeordnet ist, in eine von dieser Wand zur Außenseite des Gehäuses hin entfernte Position, die dem Öffnungszustand zugeordnet ist, zu bewegen.

2. Ölpumpe nach Anspruch 1, **dadurch gekennzeichnet, dass** das Verschlussmittel im Schließzustand blockiert wird, wenn die Temperatur des Formgedächtnis-Elements (23, 29, 33, 36) höher als die Schwellenwerttemperatur ist.

3. Ölpumpe nach Anspruch 2, **dadurch gekennzeichnet, dass** sich das Element (23, 29, 33, 36) aus Formgedächtnis-Material in Kontakt mit dem Öl befindet.

4. Ölpumpe nach Anspruch 3, **dadurch gekennzeichnet, dass** das Formgedächtnis-Element (29, 36) das Klappenventil (28, 35) in die gegen die Wand des Gehäuses gedrückte Position elastisch vorspannt.

5. Ölpumpe nach Anspruch 4, **dadurch gekennzeichnet, dass** das Verschlussmittel ein Anschlagelement (31) umfasst, an welchem das Formgedächtnis-Element (29, 36) anliegt, welches das Klappenventil (28, 35) in die gegen die Wand des Gehäuses (11) gedrückte Position vorspannt.

6. Ölpumpe nach Anspruch 3, **dadurch gekennzeichnet, dass** das Element (23, 33) aus Formgedächtnis-Material und das Klappenventil (23, 33) als ein einziges Formgedächtnis-Teil hergestellt sind.

7. Ölpumpe nach Anspruch 6, **dadurch gekennzeichnet, dass** das Formgedächtnis-Teil (23, 33) eine Klappe ist, die bezüglich der Wand des Gehäuses (11) schwenkbar gelagert ist.

8. Ölpumpe nach einem der Ansprüche 5 oder 7, **dadurch gekennzeichnet, dass** der anfängliche Betriebszustand des Verschlussmittels der Schließzustand ist.

9. Ölpumpe nach Anspruch 8, **dadurch gekennzeichnet, dass** das Verschlussmittel elastisch verformbar ist, wenn die Temperatur des Formgedächtnis-Elements (21, 29) niedriger als eine Schwellenwerttemperatur ist, wodurch das Klappenventil (21, 28) in der Lage ist, sich unter der Wirkung des Drucks des Öls in der Regelkammer aus seiner gegen die Wand des Gehäuses (11) gedrückten Position zu bewegen.

10. Ölpumpe nach Anspruch 8, **dadurch gekennzeichnet, dass** das Verschlussmittel ein Anschlagelement (24) umfasst, an welchem das Formgedächtnis-Teil (23) in der von der Wand des Gehäuses (11) entfernten Position anliegt.

11. Ölpumpe nach einem der Ansprüche 5 oder 7, **dadurch gekennzeichnet, dass** der anfängliche Betriebszustand des Verschlussmittels der Öffnungszustand ist.

12. Ölpumpe nach Anspruch 11, **dadurch gekennzeichnet, dass** das Verschlussmittel verformt wird, wenn die Temperatur des Formgedächtnis-Elements (36) oberhalb einer Schwellenwerttemperatur liegt, wodurch das Klappenventil (35) gegen die Wand des Gehäuses gedrückt wird.

13. Ölpumpe nach Anspruch 11, **dadurch gekennzeichnet, dass** das Formgedächtnis-Teil (33) verformt wird, wenn seine Temperatur oberhalb der Schwellenwerttemperatur liegt, und so geformt wird, dass es die Austrittsöffnung (22) verschließt.

14. Verbrennungsmotor, der mit einer Ölpumpe mit variabler Fördermenge nach einem der Ansprüche 1 bis 13 ausgerüstet ist.

## Claims

1. Variable-output oil pump (10) comprising a system for regulating the oil pressure according to the temperature, the pump comprising:
- a pump casing (11),
- a stator (12) mounted with the ability to move in the casing (11),
- a rotor (13) which is mounted to rotate in the stator (12) about an axis of rotation (17) that is fixed relative to the casing (11), and which bears vanes (30) able to move radially with respect to the axis of the rotor,
- a system for regulating the delivery pressure of the pump, which system is housed in a pressure regulating chamber (20) formed in the casing (11) and which acts on the stator (12) in order to move it and alter the position of the axis of rotation of the rotor (17) with respect to the stator, according to the oil output pressure,
- an oil-pressure regulating circuit (19),
- a leakage orifice (22) for oil, formed in the wall of the casing (11) and leading to the regulating chamber (20), and a shutoff means (23) for shutting off the leakage orifice (22) and which is
commanded according to the oil temperature between a first position associated with its being open and a second position associated with its being closed, **characterized in that** the shutoff means comprises an element (23, 29, 33, 36) made from a shape memory material and a shutter (23, 28, 33, 35) for shutting off the leakage orifice (22), and **in that** the shutter is able to move from a position in which it is pressed firmly against the wall of the casing (11) associated with the shutoff means being closed, into a position away from the said wall towards the outside of the casing that is associated with its being open.

2. Oil pump according to Claim 1, **characterized in that** the shutoff means is blocked in the closed position when the temperature of the shape memory element (23, 29, 33, 36) is above the threshold temperature.

3. Oil pump according to Claim 2, **characterized in that** the element (23, 29, 33, 36) made of shape memory material is in contact with the oil.

4. Oil pump according to Claim 3, **characterized in that** the shape memory element (29, 36) urges the shutter (38, 35) elastically into the position in which it is pressed firmly against the wall of the casing.

5. Oil pump according to Claim 4, **characterized in that** the shutoff means comprises an abutment (31) against which the shape memory element (29, 36) rests, urging the shutter (28, 35) into the position in which it is pressed firmly against the wall of the casing (11) .

6. Oil pump according to Claim 3, **characterized in that** the element (23, 33) made of shape memory material and the shutter (23, 33) are produced as a single shape memory component.

7. Oil pump according to Claim 6, **characterized in that** the shape memory component (23, 33) is a flap mounted with the ability to pivot with respect to the wall of the casing (11).

8. Oil pump according to one of Claims 5 and 7, **characterized in that** the initial state of operation of the shutoff means is its being closed.

9. Oil pump according to Claim 8, **characterized in that** the shutoff means is elastically deformable when the temperature of the shape memory element (21, 29) is below a threshold temperature, by virtue of which the shutter (21, 28) is able to move from its position pressed firmly against the wall of the casing (11), under the action of the pressure of the oil in the regulating chamber.

10. Oil pump according to Claim 8, **characterized in that** the shutoff means comprises an abutment (24) against which the shape memory component (23) rests when it is in the position away from the wall of the casing (11).

11. Oil pump according to one of Claims 5 and 7, **characterized in that** the initial state of operation of the shutoff means is its being open.

12. Oil pump according to Claim 11, **characterized in that** the shutoff means is deformed when the temperature of the shape memory element (36) is above a threshold temperature, by virtue of which the shutter (35) is pressed firmly against the wall of the casing.

13. Oil pump according to Claim 11, **characterized in that** the shape memory component (33) is deformed when its temperature is above the threshold temperature and it is shaped to shut off the leakage orifice (22).

14. Internal combustion engine equipped with a variable-output oil pump according to any one of Claims 1 to 13.
